(19) Europäisches Patentamt
European Patent Office
Office européen des brevets

(11) **EP 3 312 208 B1**

(12) **EUROPEAN PATENT SPECIFICATION**

(45) Date of publication and mention of the grant of the patent:
**22.02.2023 Bulletin 2023/08**

(21) Application number: **16811540.0**

(22) Date of filing: **09.06.2016**

(51) International Patent Classification (IPC):
***C08G 18/32*** $^{(2006.01)}$ ***B32B 9/00*** $^{(2006.01)}$
***B32B 27/00*** $^{(2006.01)}$ ***C09D 201/00*** $^{(2006.01)}$
***C09J 201/00*** $^{(2006.01)}$ ***C08G 18/42*** $^{(2006.01)}$
***C09J 175/04*** $^{(2006.01)}$ ***C09J 175/06*** $^{(2006.01)}$
***B32B 7/14*** $^{(2006.01)}$ ***B32B 27/26*** $^{(2006.01)}$

(52) Cooperative Patent Classification (CPC):
(C-Sets available)
**C09J 175/06; B32B 7/12; B32B 15/04; B32B 27/08; B32B 27/28; B32B 27/302; B32B 27/304; B32B 27/306; B32B 27/32; B32B 27/34; B32B 27/36; B32B 29/002; C08G 18/4219; C08G 18/423; C08G 18/4241;**

(Cont.)

(86) International application number:
**PCT/JP2016/067216**

(87) International publication number:
**WO 2016/204065 (22.12.2016 Gazette 2016/51)**

(54) **TWO-PART CURABLE COMPOSITION, TWO-PART-TYPE ADHESIVE AGENT, TWO-PART-TYPE COATING AGENT, AND LAMINATE**

HÄRTBARE ZWEIKOMPONENTEN-ZUSAMMENSETZUNG, ZWEIKOMPONENTEN-KLEBER, ZWEIKOMPONENTEN-BESCHICHTUNGSMITTEL UND LAMINAT

COMPOSITION DURCISSABLE BICOMPOSANT, AGENT ADHÉSIF DE TYPE BICOMPOSANT, AGENT DE REVÊTEMENT DE TYPE BICOMPOSANT, ET STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2015 JP 2015122887**
**01.07.2015 JP 2015132700**

(43) Date of publication of application:
**25.04.2018 Bulletin 2018/17**

(73) Proprietor: **DIC Corporation**
**Tokyo 174-8520 (JP)**

(72) Inventors:
- **NAKASHIMA Michiya**
  **Sakura-shi**
  **Chiba 285-8668 (JP)**
- **TAKEDA Hiroyuki**
  **Sakura-shi**
  **Chiba 285-8668 (JP)**

(74) Representative: **TBK**
**Bavariaring 4-6**
**80336 München (DE)**

(56) References cited:
**WO-A1-2011/089090** **WO-A1-2014/103994**
**DE-A1- 19 629 161** **JP-A- 2001 011 416**
**JP-A- 2013 014 722** **US-A- 3 886 122**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**C08G 18/425; C08G 18/4661; C08G 18/73; C08G 18/7621; C08G 18/7642; C08G 18/7664; C08G 18/7831; C08G 18/7837; C08G 18/8029; C09D 175/06; C09D 201/00; C09J 201/00;**
B32B 2250/02; B32B 2250/03; B32B 2250/24; B32B 2255/10; B32B 2255/205; B32B 2255/26; B32B 2307/514; B32B 2307/584; B32B 2307/7244; B32B 2307/7246; B32B 2439/70; B32B 2457/00; B32B 2509/00

C-Sets
**C08G 18/10, C08G 18/48**

## Description

### Technical Field

The present invention relates to a two-component curable composition, a two-component adhesive and a two-component coating agent each using the two-component curable composition, and a laminate produced by using the two-component coating agent or the two-component coating agent.

### Background Art

There are known a two-component adhesive and a two-component coating agent each using a two-component curable composition which is cured by mixing and reacting a first agent with a second agent. For example, the two-component adhesive is used for various applications such as a sealing material, a general-purpose adhesive, a structural adhesive, etc. The two-component coating agent is used for improving scratch resistance and modifying surface properties of a plastic product, an electronic material part, a home electric appliance, a wood product, a film, and the like, and for other like purposes.

A known example of such two-component adhesive and two-component coating agent is a polyurethane type using a first agent having a first functional group and a second agent having a second functional group reactable with the first functional group. The relatively more stable one of the two agents is regarded as the first agent, and the other having higher reactivity than the first agent is regarded as the second agent. That is, a resin having a hydroxyl group, such as polyester polyol, polyether polyol, or the like, is used as the first agent, and an isocyanate compound is used as the second agent. The second agent often has higher toxicity due to its high reactivity as compared with the first agent.

Also, the first agent and the second agent in each of the two-component adhesive and the two-component coating agent are generally mixed and used at such a ratio that the equivalent ratio of the second functional group is excessive compared to the first functional group.

For example, Patent Literature 1 describes that the use ratio of copolymerized polyester polyol to polyisocyanate is preferably within a range of 1.5 to 2.5 in terms of molar ratio (NCO/OH) of NCO groups to OH groups.

Patent Literature 2 describes that the ratio of hydroxyl groups due to a polyol component, such as polyester poly or the like, to isocyanate groups due to a polyisocyanate component is such that OH:NCO is preferably about 1:1 to 1:4 and more preferably about 1:1 to 1:3. Both patent literatures recommend that the mixing ratio of isocyanate groups corresponding to the second agent is excessive.

The reason for this is that when the second agent having relatively high reactivity is reacted with the first agent, the reaction (curing) with the first agent is prevented from being made insufficient due to the consumption by reaction with reactive substances, for example, water, oxygen, and the like, other than the first agent present in the surroundings. Therefore, the excessive second agent may remain in the adhesive and the coating agent after curing.

### Citation List

#### Patent Literature

PTL 1: Japanese Unexamined Patent Application Publication No. 2003-003145
PTL 2: Japanese Unexamined Patent Application Publication No. 2008-156502

WO 2014/103994 A1 describes a polyester resin composition containing a polyester polyol with a glycerol backbone, and a curing agent. The polyester resin composition is characterized by containing at least 5 mass% of the glycerol backbone of the polyester polyol.

### Summary of Invention

#### Technical Problem

For example, packaging films for foods have a structure formed by bonding together a plurality of substrate with an adhesive, and a polyurethane-based adhesive frequently used for such packaging films causes the remaining of an excessive isocyanate compound in an adhesive layer. The remaining isocyanate compound reacts with water present in the surroundings to produce an amine compound and carbon dioxide gas, and the amine compound may be extracted to foods in boiling retort treatment. Also, the carbon dioxide gas cannot permeate through the substrates and

thus it may remain between the substrates and produce bubbles.

In order to decrease the amine extracted to foods and to suppress the occurrence of air bubbles between the substrates, the amount of the second agent used is preferably minimized. However, when the amount of the second agent used is simply decreased for avoiding such a failure, the curing described above is made insufficient, and the function as an adhesive may not be sufficiently exhibited. In particular, when a difunctional compound used as the second agent, the shortage of adhesive strength becomes remarked.

Similarly, when the amount of the second agent used is simply decreased in order to prevent the remaining in a coating layer after curing, a coating film may lack physical properties due to insufficient curing.

The present invention has been achieved for solvent at least some of the problems described above and an object of the present invention is to provide a two-component curable composition exhibiting the same curability as usual even when the equivalent ratio of a second functional group to a first functional group is lower than usual. Another object is to provide, by using the two-component curable composition, a two-component adhesive having the same adhesive strength as usual and a two-component coating agent having the same curability as usual even when the equivalent ratio of a second functional group to a first functional group is lower than usual. A further object is to provide a laminate in which the equivalent ratio of a second functional group to a first functional group is lower than usual, and thus the second agent little remains in an adhesive layer and a coating layer which are formed by curing the two-component adhesive and the two-component coating agent, respectively, thereby causing little toxicity to human bodies and environments.

## Solution to Problem

The present invention includes the following items.

1. A two-component curable composition comprising:

   a first agent which is produced by reacting a monomer for introducing a branch unit into a molecule with a monomer for introducing a first functional group into a molecular terminal; and

   a second agent which has a second functional group reactable with the first functional group, wherein the branching coefficient of the first agent is 1/f or more;

   f is the number of functional groups possessed by a monomer having the largest number of functional groups among monomers for introducing a branch unit in a molecule;

   the average number of second functional groups possessed by the second agent is 2.5 or more; and

   in mixing and using the agents, the equivalent ratio of the second functional group to the first functional group is 0.15 or more and less than 0.5;

   wherein the first functional group is a hydroxyl group, and the second functional group is an isocyanate group; and

   wherein the first agent contains a resin having, as a main skeleton, a polyester structure, a polyester polyurethane structure, or a polyether structure;

   wherein the branching coefficient and the equivalent ratio are determined as described further below.

2. The two-component curable composition according to Item 1, wherein the branching coefficient of the first agent is 1/(f - 1) or more.

3. The two-component curable composition according to Item 1 or 2, wherein the branching coefficient of the first agent is 0.6 or less.

4. A two-component adhesive comprising the two-component curable composition according to any one of Item 1 to 3.

5. The two-component adhesive according to item 4, wherein the number-average molecular weight of the first agent is 600 or more and 3000 or less.

6. A two-component coating agent comprising the two-component curable composition according to any one of Item

1 to 3.

7. The two-component coating agent according to Item 6, wherein the number-average molecular weight of the first agent is 1,000 or more and 50,000 or less.

8. A laminate comprising:

a first substrate;
a second substrate; and
an adhesive layer which laminates the first substrate and the second substrate,
wherein the adhesive layer is formed by mixing a first agent with a second agent,
the first agent is produced by reacting a monomer for introducing a branch unit into a molecule with a monomer for introducing a first functional group into a molecular terminal,
the branching coefficient of the first agent is 1/f or more,
wherein f is the number of functional groups possessed by a monomer having the largest number of functional groups among monomers for introducing a branch unit into a molecule,
the second agent has a second functional group reactable with the first functional group and has an average number of second functional groups of 2.5 or more, and
in mixing the agents, the equivalent ratio of the second functional group to the first functional group is 0.15 or more and less than 0.5,
wherein the first functional group is a hydroxyl group, and

the second functional group is an isocyanate group; and
wherein the first agent contains a resin having, as a main skeleton, a polyester structure, a polyester polyurethane structure, or a polyether structure;
wherein the branching coefficient and the equivalent ratio are determined as described further below.

9. The laminate according to Item 8, wherein the first substrate and the second substrate each have a vapor-deposited layer of a metal oxide disposed on a resin film, and the vapor-deposited layer of the first substrate and the vapor-deposited layer of the second substrate are disposed to face each other.

Advantageous Effects of Invention

According to a two-component curable composition of the present invention, a two-component curable composition showing the same curability as usual can be produced even by mixing and using a first agent having a first functional group and a second agent, which has a second functional group reactable with the first functional group, at a lower equivalent ratio of the second functional group to the first functional group than usual.

According to a two-component adhesive using such a two-component curable composition, a two-component adhesive showing the same adhesive strength as usual can be produced even by mixing and using a first agent and a second agent at a lower equivalent ratio of the second functional group to the first functional group than usual. According to a two-component coating agent using the two-component curable composition, a two-component coating agent showing the same curability as usual can be produced even by mixing and using a first agent and a second agent at a lower equivalent ratio of the second functional group to the first functional group than usual. Further, according to a two-component adhesive and two-component coating agent of the present invention, an adhesive and a coating agent can produced, which have substantially no remaining of the second agent in an adhesive layer and a coating layer, respectively, formed by curing and which have little toxicity to human bodies and environments.

Further, a laminate of the present invention can be produced as a laminate which has substantially no remaining of the second agent in an adhesive layer for bonding together a plurality of substrates and in a coating layer provided on a substrate and which has little toxicity to human bodies and environments. Further, the laminate of the present invention has substantially no occurrence of air bubbles due to the gas generated by reaction of the excessive second agent with surrounding water and the like, and thus has an excellent appearance.

Description of Embodiments

A two-component curable composition of the present invention contains a first agent, which is produced by reacting a monomer for introducing a branch unit into a molecule with a monomer for introducing a first functional group into a molecular terminal, and a second agent which has a second functional group reactable with the first functional group. The branching coefficient of the first agent is 1/f or more, and the first and second agents are mixed and used at

such a ratio that the equivalent ratio of the second functional group to the first functional group is excessive for the first functional group (the equivalent ratio of the second functional group to the first functional group is less than 1). In this case, f is the number of functional groups possessed by a monomer having the largest number of functional groups among monomers for introducing a branch unit in a molecule. For convenience, the equivalent ratio of the second functional group to the first functional group is simply referred to as the "(second functional group/first function group) ratio" hereinafter. The two-component curable composition of the present invention and the two-component adhesive, the two-component coating agent, and the laminate using the two-component curable composition are described below.

<Two-component curable composition>

First, the two-component curable composition which can be preferably used mainly for the two-component adhesive is described by giving an example. The two-component curable composition suitable for the two-component coating agent is described later.

(First agent)

In the specification of the invention, the term "first agent" represents an agent having lower reactivity than the second agent described below. The first agent is defined in claim 1, and the first functional group is a hydroxyl group provided at an end of a branch structure, the value of branching coefficient $\alpha$ is 1/f or more, and desired adhesive force can be exhibited by reaction with the second agent described below. Used is a resin having as a main skeleton a polyester structure, a polyester polyurethane structure, or a polyether structure, and having a hydroxyl group at an end. The hydroxyl group introduced into an end of the resin is the first functional group in the scope of claims.

First, the branching coefficient $\alpha$ is described by using, as an example, a polymer produced by three-component polycondensation of a compound having two functional groups X in a molecule as represented by formula (1) below, a compound having two functional groups Y reactable with functional groups X in a molecule as represented by formula (2) below, and a compound having three functional groups X in a molecule as represented by formula (3) below. The polymer is expected to have a branch structure as represented by formula (4) below.

[Chem. 1]

X-X (1)

Y-Y (2)

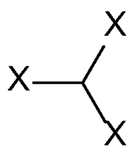

(3)

[Chem. 2]

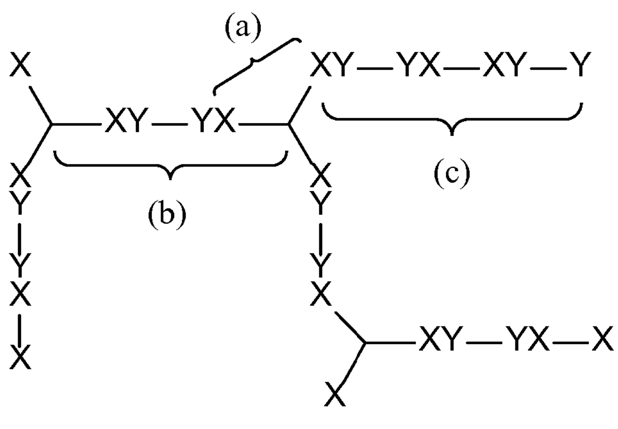

(4)

The structure represented by the formula (4) contains three branch units (structures, for example (a), derived from the formula (3)). When a portion (for example, (b)) held between the branch units and a portion (for example, (c)) held between the branch unit and an unreacted terminal group are chains, the branching coefficient $\alpha$ is defined as the ratio of the number of chains each bonded to branch units at both ends to the total number of chains. In other words, the branching coefficient $\alpha$ is the probability that a chain extending from a branch unit is bonded to a next branch unit.

A chain bonded to branch units at both ends is represented by formula (5) below.

[Chem. 3]

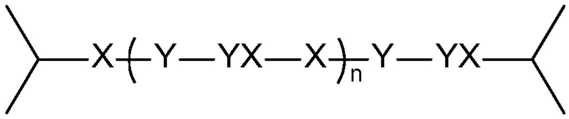

(5)

(In the formula (5), n represents an integer of 0 or more.)

In this case, when the ratio of X belonging to the branch unit to the total number of functional groups X present in a reaction system is $\rho$, the ratio of X not belonging to the branch unit (belonging to X-X) is $(1 - \rho)$. In addition, when the probability of reaction of the functional group X with the functional group Y is $p_X$ and the probability of reaction of Y with X is $p_Y$, the probability of reaction of the functional group Y with the functional group X belonging to X-X is $p_Y(1 - \rho)$, and the probability of reaction with X belonging to the branch unit is $p_Y\rho$. Therefore, when n = 1, the probability of production of a chain as represented by the formula (5) is $p_Xp_Y(1 - \rho)p_Xp_Y\rho$ which is generalized to be $p_X[p_Xp_Y(1 - \rho)]^n p_Xp_Y\rho$. Since a number of 0 to any number can be taken as n, the branching coefficient $\alpha$ corresponding to a total of numbers n is represented by formula (6) bellow.

[Math. 1]

$$\alpha = \sum_{n=0}^{\infty} \left[p_X p_Y (1-\rho)\right]^n p_X p_Y \rho = p_X p_Y \rho / \left[1 - p_X p_Y (1-\rho)\right] \quad (6)$$

When the ratio of X to Y present before reaction is $\gamma$, $p_X = p_Y\gamma$, and thus substitution into the formula (6) produces formula (7) or (8) below.

[Math. 2]

$$\alpha = \gamma p_X^2 \rho / \{1 - \gamma p_X^2 (1-\rho)\} \quad (7)$$

$$\alpha = p_Y^2 \rho / \{\gamma - p_Y^2 (1-\rho)\} \quad (8)$$

Since $\rho$ and $\gamma$ in the reaction system are known, $\alpha$ can be determined by measuring $p_X$ or $p_Y$.

Further, $p_X$ and $p_Y$ can be determined by measuring the amounts of the functional groups X and Y remaining in the system. For example, when the functional group X is a carboxyl group, the amount of carboxyl groups remaining in the system can be measured by a test method for acid value described in JIS-K0070. Since the amount of carboxyl groups present before the reaction is known, the probability $p_{COOH}$ of reaction of carboxyl groups with the functional group Y is as shown by formula (9) below.

[Math. 3]

$$p_{COOH} = 1 - \frac{\text{Number of carboxyl groups remaining in system}}{\text{Number of carboxyl groups present in system before reaction}} \qquad (9)$$

In addition, polycondensation of a three-component system containing a compound having two functional groups X in its molecule, a compound having two functional groups Y reactable with functional group X in its molecule, and a compound having three functional groups X in its molecule is described above as an example.

However, the same method can be used for determining the branching coefficient for the following polymerization systems:

- polymerization of a three-component system containing a compound having two functional groups X in its molecule, a compound having two functional groups Y reactable with functional group X in its molecule, and a compound having four functional groups X in its molecule;
- polymerization of a four-component system containing a compound having two functional groups X in its molecule, a compound having two functional groups Y reactable with functional group X in its molecule, a compound having three functional groups X in its molecule, and a compound having three functional groups Y its molecule; and
- polymerization of another combination of compounds.

The present invention uses the first agent having a branching coefficient $\alpha$ of 1/f or more. In this case, f is the number of functional groups possessed by a compound having the largest number of functional groups used for synthesizing the first agent.

For example, when the first agent is synthesized through a polyester polyol produced by using a trifunctional polyvalent carboxylic acid and a difunctional polyhydric alcohol, f is 3, and thus the first agent is synthesized so that the branching coefficient $\alpha$ is adjusted to 0.33 or more. In addition, when in producing a polyester polyol by using a plurality of compounds containing a tetrafunctional polyvalent carboxylic acid and a trifunctional polyhydric alcohol, the compound having the largest number of functional groups among the plurality of compounds is the tetrafunctional polyvalent carboxylic acid, f is 4. Therefore, the first agent is synthesized so that the branching coefficient $\alpha$ is adjusted to 0.25 or more.

By using the first agent having a branching coefficient $\alpha$ or 1/f or more, an adhesive having excellent adhesive force can be produced even when the (second functional group/first functional group) ratio for reaction with the second agent described below is less than 1.

Further, more preferably used is the first agent having a branching coefficient $\alpha$ equivalent to or higher than a branching coefficient critical value $\alpha c$ represented by formula (10) below.

[Math. 4]

$$\alpha c = \frac{1}{f - 1} \qquad (10)$$

For example, when a polyester polyol is produced by using a trifunctional polyvalent carboxylic acid and a difunctional polyhydric alcohol, the branching coefficient critical value $\alpha c$ is 0.5. In addition, when in producing a polyester polyol by using a plurality of compounds containing a tetrafunctional polyvalent carboxylic acid and a trifunctional polyhydric alcohol, the compound having the largest number of functional groups among the plurality of compounds is the tetrafunctional polyvalent carboxylic acid, the branching coefficient critical value $\alpha c$ is about 0.33.

The branching coefficient critical value $\alpha c$ is theoretically a value which causes gelation of a polymer, but the branching coefficient $\alpha$ at a gelation point is actually higher than the critical value $\alpha c$. By using the first agent having the branching coefficient $\alpha$ close to the critical value $\alpha c$, an adhesive having more excellent adhesive force can be produced even when the (second functional group/first functional group) ratio for reaction with the second agent described below is less than 1.

The upper limit of the branching coefficient $\alpha$ is not particularly limited, and any branching coefficient $\alpha$ can be used without a problem as long as it is approximately a value which causes no gelation of the first agent. However, for example, the branching coefficient $\alpha$ is preferably 0.6 or less. When the branching coefficient $\alpha$ of the first agent exceeds 0.6, with exceptions, gelation may occur or long-term storage stability may be decreased.

The first agent of the present invention is produced by polymerizing a monomer mixture containing, as essential components, a monomer (A) for introducing a branch unit into a molecule and a monomer (B) for introducing a functional group (first functional group) having reactivity with a functional group (second functional group) possessed by the second agent described below into a molecular end, and if required, a monomer (C) for extending chains between the branch

units and between the branch unit and a molecular end. The number of functional groups possessed by the monomer (A) and the ratio between the monomers (A), (B), and (C) in the monomer mixture are properly adjusted so that the branching coefficient $\alpha$ of the first agent is a desired value.

Examples of the monomer (A) for introducing a branch unit into a molecule include a tri- or higher-functional polyhydric alcohol, a polyvalent carboxylic acid, a polyvalent isocyanate, a polyvalent amine, and the like. Any monomer can be used as the monomer (B) as long as it has a hydroxyl group at at least one of the ends of the molecule and has, at plural ends, functional groups reactable with the monomer (A) or the monomer (C). Examples thereof include a diol, an aminoalcohol, a hydroxy acid, and the like. Examples of the monomer (C) include a diol, a dicarboxylic acid, a dicarboxylic anhydride, diisocyanate, and the like. These many be used in proper combination. The monomer (A) also functions as the monomer (B) according to the combination of the monomer (B) and the monomer (C). The monomer (B) also functions as the monomer (C) according to the combination of the monomer (A) and the monomer (C).

For example, when a polyester polyol is produced as the first agent, it is considered to use a tri- or higher-functional polyvalent carboxylic acid as the monomer (A), a diol or hydroxy acid as the monomer (B), and a diol, a dicarboxylic acid, or a hydroxy acid as the monomer (C), to use a tri- or higher-functional polyhydric alcohol as the monomer (A), a diol or hydroxy acid as the monomer (B), and a dicarboxylic acid, a diol, or a hydroxy acid as the monomer (C), or the like. In this case, when a tri- or higher-functional polyhydric alcohol is introduced into an end of the first agent, the monomer (A) also functions as the monomer (B). The diol or hydroxyl acid also functions as the monomer (B) and the monomer (C).

Alternatively, when a polyurethane polyol is produced as the first agent, it is considered to use a trifunctional polyvalent isocyanate as the monomer (A), a diol as the monomer (B), and a combination of a diisocyanate and a diol as the monomer (C), to use a tri- or higher-hydric alcohol as the monomer (A), a diol as the monomer (B), and a combination of a diisocyanate and a diol as the monomer (C), or the like.

Known monomers can be used as the monomers (A), (B), and (C) without any particular limit.

Examples of the tri- or higher-functional polyhydric alcohol which can be used as the monomer (A) for introducing a branch unit into the molecule include aliphatic polyhydric alcohols such as glycerin, trimethylolpropane, trimethylolethane, tris(2-hydroxyethyl) isocyanurate, 1,2,4-butanetriol, 1,2,6-hexanetriol, pentaerythritol, diglycerin, dipentaerythritol, triglycerin, tripentaerythritol, and the like; alicyclic polyhydric alcohols such as cyclohexanetriol and the like; saccharides such as xyrose, arabinose, ribulose, glucose, fructose, mannose, galactose, erythrite, threit, arabite, ribitol, xylite, sorbit, mannite, sucrose, and the like; and the like.

Examples of the tri- or higher-functional polyvalent carboxylic acid include aliphatic polyvalent carboxylic acids such as 1,2,3-propanetricarboxylic acid, meso-butane-1,2,3,4-tetracarboxylic acid, and the like; alicyclic polyvalent carboxylic acids such as cyclobutane tetracarboxylic acid, cyclopentane tetracarboxylic acid, cyclohexane tetracarboxylic acid, acid anhydrides thereof, and the like; aromatic polyvalent carboxylic acids such as pyromellitic acid, trimellitic acid, benzophenone tetracarboxylic acid, naphthalene tetracarboxylic acid, acid anhydrides thereof, and the like; and the like.

Examples of the tri- or higher-functional polyvalent isocyanate include adducts each produced by reacting an excessive amount of diisocyanate compound, such as tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, isophorone diisocyanate, or the like, with a low-molecular active hydrogen compound such as trimethylolpropane, glycerol, pentaerythritol, erythritol, sorbitol, triethanolamine, or the like, an alkyleneoxide adduct thereof, or any one of high-molecular active hydrogen compounds such as various polyester resins, polyether polyols, polyamides, and the like.

Further, as in the compounds exemplified above, the functional groups of the monomer (A) may be different as long as the compound has three or more functional groups. For example, a compound having a total of 3 or more of hydroxyl group and carboxyl group in the same molecule can be used.

The compounds exemplified above can be used alone or in combination of two or more as the monomer (A).

Examples of the diol which can be used as the monomer (B) for introducing, into a molecular end, a functional group (first functional group) having reactivity with a functional group (second functional group) possessed by the second agent described below include:

polyalkylene glycol such as ethylene glycol, diethylene glycol, propylene glycol, dipropylene glycol, and the like; aliphatic diols such as 1,2-dutanediol, 1,3-butanediol, 1,4-butanediol, 2,3-butanediol, 3-methyl-1,5-pentanediol, neopentyl glycol, 2-methyl-2-propyl-1,3-propanediol, 1,5-pentanediol, 1,6-hexanediol, 2-methyl-2,4-pentanediol, 2,2,4-trimethyl-1,3-pentanediol, 2-ethyl-1,3-hexanediol, 2,5-dimethyl-2,5-hexanediol, 1,8-octanedio, 1,9-nonanediol, and the like;

alicyclic diols such as 1,2-cyclohexanediol, 1,2-cyclohexanedimethanol, 1,3-cyclohexanediol, 1,3-cyclohexanedimethanol, 1,4-cyclohexanediol, 1,4-cyclohexanedimethanol, and the like;

aromatic diols such as 1,3-bishydroxyethylbenzene, 1,4-bishydroxyethylbenzene, hydroquinone, resorcin, catechol, 4,4'-dihydroxydiphenyl, 4,4'-dihydroxybenzophenone, 4,4'-dihydroxydiphenylmethane, 4,4'-dihydroxydiphenylethane, 4,4'-dihydroxydiphenyl ether, 2,2'-bis(4-hydroxyphenyl)propane, 4,4'-hydroxydiphenyl sulfone, 4,4'-dihydroxydiphenyl sulfide, 2,6-dihydroxynaphthalene, 1,5-(di)hydroxynaphthalene, and the like; and the like.

Examples of the amino alcohol include monoakanolamines such as monoethanolamine, N,N-dimethylethanolamine, N,N-diethylethanolamine, and the like.

Examples of the hydroxy acid include aliphatic hydroxy acids such as glycolic acid, lactic acid, ricinoleic acid, and the like; and
aromatic hydroxy acids such as o-hydroxybenzoic acid, m-hydroxybenzoic acid, p-hydroxybenzoic acid, phloretic acid, coumaric acid, the like.

The monomers exemplified above can be used alone or in combination of two or more as the monomer (B).

Each of the monomers (B) exemplified above can also be used as the monomer (C) for extending chains between the branch units and between the branch unit and a molecular end. Further, a difunctional compound having two same functional groups in the same molecule, such as a dicarboxylic acid, a diisocyanate, or the like exemplified below, can be used as the monomer (C).

Examples of the dicarboxylic acid include aliphatic dicarboxylic acids such as succinic acid, glutaric acid, adipic acid, pimelic acid, suberic acid, azelaic acid, sebacic acid, decanedioic acid, dodecanedioic acid, and the like;

unsaturated bond-containing dicarboxylic acids such as maleic anhydride, malic acid, fumaric acid, and the like;
alicyclic dicarboxylic acids such as 1,3-cyclopentane dicarboxylic acid, 1,4-cyclohexane dicarboxylic acid, and the like;
aromatic dicarboxylic acids such as orthophthalic acid, terephthalic acid, isophthalic acid, 1,4-naphthalenedicarboxylic acid, 2,5-naphthalenedicarboxylic acid, 2,6-naphthalenedicarboxylic acid, naphthalic acid, biphenyldicarboxylic acid, diphenic acid, anhydrides thereof, and the like; and the like.

Examples of the diisocyanate include tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, isophorone diisocyanate, and the like.

The monomers exemplified above can be used alone or in combination of two or more as the monomer (C).

Further, when the first agent contains an aromatic skeleton, particularly an ortho-position phthalic acid skeleton, and an alkyl straight-chain compound having 4 or less of carbon atoms as a main component, a gas barrier property can be imparted to an adhesive layer.

In this case, examples of the monomer (A) which can be preferably used include glycerin, trimethylolpropane, tris(2-hydroxyethyl) isocyanurate, pyromellitic acid, trimellitic acid, and anhydrides thereof.

Examples of the monomer (B) include ethylene glycol, propylene glycol, 1,4-butanediol, 1,3-bishydroxyethylbenzene, 1,4-bishydroxyethylbenzene, monoethanolamine, glycolic acid, hydroquinone, resorcin, and catechol.

In addition to the compounds exemplified as the monomer (B), example of the monomer (C) include orthophthalic acid, terephthalic acid, isophthalic acid, 1,4-naphthalenedicarboxylic acid, 2,5-naphthalenedicarboxylic acid, 2,6-naphthalenedicarboxylic acid, and succinic acid.

When a gas barrier property is imparted to an adhesive layer by using the first agent produced from the monomers (A), (B) and (C), the elastic modulus of the adhesive layer tends to be increased because of the increased crosslinking point density and the absence or a very low ratio of a skeleton with flexibility, such as a long-chain alkyl skeleton or ether skeleton or the like. In such a case, when the first agent and the second agent are mixed and used at the same (second functional group/first functional group) ratio as a usual two-component adhesive, for example, 1.5 to 2.5, an anchor effect may be weakened due to the excessively high crosslink density, and thus the function as an adhesive may be impaired. However, when the first agent has the branching coefficient $\alpha$ of 1/f or more and is mixed with the second agent so that the (second functional group/first functional group) ratio is less than 1, the crosslinking point density due to the second agent can be decreased while the adhesive layer is securely cured. The formed adhesive layer has high adhesive strength and the barrier property without flexibility being impaired.

The acid value of the first agent is preferably 0.1 mgKOH/g or more and 20 mgKOH/g or less and more preferably 0.5 mgKOH/g or more and 10 mgKOH/g or less. Such a resin contains a small amount of unreacted acid component which is not esterified, and thus hydrolysis with time during solution storage is suppressed, thereby causing excellent storage stability.

Also, the hydroxyl value is preferably 40 mgKOH/g or more and 500 mgKOH/g or less and more preferably 50 mgKOH/g or more and 350 mgKOH/g or less. Such a resin has excellent viscosity stability after being mixed with the second agent.

The number-average molecular weight of the first agent is preferably 600 or more and 3000 or less, more preferably 600 or more and 2000 or less, and still more preferably 700 or more and 1500 or less. This results in excellent solubility in a solvent, film coatability, and laminate suitability.

The first agent can be combined with known additives selected according to the type thereof. Examples thereof include silane coupling agents such as a hydrolysable alkoxysilane compound and the like, a titanate-based coupling agent, an aluminum-based coupling agent, and adhesion accelerators such as an epoxy resin and the like. In addition, any one of various leveling agents may be added for smoothening a coating surface during coating lamination.

(Second agent)

In the present invention, an agent having higher reactivity than the first agent is regarded as the second agent. The second agent used in the present invention is
a polyfunctional isocyanate compound. An isocyanate group is the second functional group within the scope of claims.
A known compound can be used as the isocyanate compound without any particular limit and, for example, an aromatic or aliphatic isocyanate compound can be used, which may be either a low-molecular compound or a high-molecular compound.
A known compound can be used as the isocyanate compound without any particular limit and, for example, an aromatic or aliphatic isocyanate compound can be used, which may be either a low-molecular compound or a high-molecular compound. Examples thereof include general-purpose diisocyanate compounds such as tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate isophorone diisocyanate, naphthalene diisocyanate, norbornene diisocyanate, and the like. It is also possible to use a compound produced by reacting an excessive amount of the diisocyanate compound with a divalent active hydrogen compound, such as ethylene glycol, propylene glycol, diethylene glycol, metaxylylene alcohol, 1,3-bishydroxyethylbenzene, 1,4-bishydroxyethylbenzene, ethylene diamine, monoethanolamine, or the like, polyester diol, polyol diol, or the like.
An isocyanate compound having an average number of functional groups of 2.5 or more is, for example, polymeric diphenylmethane diisocyanate.
Examples of an isocyanate compound having an average number of functional groups of 3.0 or more include tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, isophorone diisocyanate, trimers of these isocyanate compounds; an adduct produced by reacting an excessive amount of any one of these isocyanate compounds with a low-molecular active hydrogen compound, such as ethylene glycol, propylene glycol, metaxylylene alcohol, 1,3-bishydroxyethylbenzene, 1,4-bishydroxethylbenzene, trimethylolpropane, glycerol, pentaerythritol, erythritol, sorbitol, ethylenediamine, monoethanolamine, diethanolamine, triethanolamine, metaxylylenediamine, or the like, an alkylene oxide adduct thereof, a high-molecular active hydrogen compound, such as polyester resin, polyether polyol, or polyamide; isocyanurate which is a multimer of diisocyanate; an allophanate; a biuret produced by reaction with amine; and the like.
Also, blocked isocyanate may be used as the isocyanate compound. Examples of an isocyanate blocking agent include phenols such as phenol, thiophenol, methylthiophenol, ethylthiophenol, cresol, xylenol, resorcinol, nitrophenol, chlorophenol, and the like; oximes such acetoxime, methyl ethyl ketoxime, cyclohexanone, and the like; alcohols such as methanol, ethanol, propanol, butanol, and the like; halogen-substituted alcohols such as ethylene chlorohydrin, 1,3-dichloro-2-propanol, and the like; tertiary alcohols such as tert-butanol, tert-pentanol, and the like; lactams such as ε-caprolactam, δ-valerolactam, γ-butyrolactam, β-propyrolactam, and the like. Other examples include active methylene compounds such as dimethylpyrazole, aromatic amines, imides, acetylacetone, acetoacetic acid esters, malonic acid ethyl ester, and the like; mercaptans, imines, ureas, diallyl compound sodium bisulfite, and the like. The blocked isocyanate can be produced by a known common method for addition reaction of the isocyanate compound with the isocyanate blocking agent.
The second agent used in the present invention contains the compound alone or a mixture of a plurality of the compounds described above, and i) has an average number of second functional groups of 2.5 or more and preferably 3.0 or more

i) An isocyanate compound having an average number of functional groups of 2.5 or more and a tri- or higher-functional isocyanate compound are preferably used alone or as a mixture as the second agent having an average number of second functional groups of 2.5 or more.

When a relatively low-molecular-weight isocyanate compound having a low molecular weight of 100 or more and 300 or less is used as the difunctional second agent, the molecular weight can be increased by urethane extension by rapid reaction with the first agent, and thus initial shear strength, which is one of the necessary characteristics of the adhesive in a laminating operation, can be increased. Therefore, a tunneling trouble during lamination can be decreased. Examples of the isocyanate compound include toluene diisocyanate, diphenylmethane diisocyanate, hexamethylene diisocyanate, metaxylene diisocyanate, isophorone diisocyanate, naphthalene diisocyanate, and the like. Among these,

hexamethylene diisocyanate and metaxylene diisocyanate are preferably used.

By using a straight-chain isocyanate compound having a molecular weight of 300 or more as the second agent, the flexibility of the adhesive layer can be improved. This can increase seal strength and laminate strength. The isocyanate compound is, for example, the product of reaction of an excessive amount of diisocyanate with diol such as polyol diol, polyester diol, polyurethane polyester diol, polyamide polyester diol, or the like.

When the two-component adhesive of the present invention is imparted with the gas barrier property, an isocyanate compound having an aromatic ring, such as toluene diisocyanate, diphenylmethane diisocyanate, xylylene diisocyanate, or the like, is preferably used as the second agent, and an isocyanate compound containing a metaxylene skeleton is particularly preferably used. By using the isocyanate compound containing a metaxylene skeleton, the gas barrier property can be improved by $\pi$-$\pi$ stacking between aromatic rings in addition to the hydrogen bond of a urethane group.

Examples of the isocyanate compound having a metaxylene skeleton include a trimer of xylene diisocyanate, a biuret synthesized by reaction with amine, an adduct synthesized by reaction with an alcohol, and the like. The adduct is more preferably used because the solubility in an organic solvent used for a dry laminate adhesive containing a polyisocyanate compound can be achieved as compared with the trimer and the biuret. An adduct produced by reaction with an alcohol properly selected from the low-molecular active hydrogen compounds described above can be used as the adduct, and an adduct with an ethylene oxide adduct of trimethylolpropane, glycerol, triethanolamine, or metaxylenediamine is particularly preferred.

<Two-component adhesive>

(Two-component adhesive)

The two-component adhesive of the present invention contains the first agent and second agent described above, and the agents are mixed and used so that the (second functional group/first functional group) ratio falls within a range described below.

When the second agent has an average number of second functional groups of 2.5 or more, the agents are preferably mixed and used so that the (second functional group/first functional group) ratio is 0.15 or more and less than 0.50. With the (second functional group/first functional group) ratio of less than 0.15, sufficient adhesive strength may not be obtained. While with the equivalent ratio exceeding 0.60, adhesive strength may be decreased due to an excessively high crosslink density.

The agents are mixed and used so that the (second functional group/first functional group) ratio is 0.15 or more and less than 0.50 because preferred adhesive force can be maintained while suppressing the amount of the second agent used. Also, when the first agent and the second agent are mixed and used so that the (second functional group/first functional group) ratio is within a very low range of 0.15 or more and
less than 0.50, the second agent more preferably has an average number of second functional groups of 3.0 or more.

For example, when 100 g of polyol is used as the first agent and Z g of polyisocyanate is used as the second agent, the (second functional group/first functional group) ratio, that is, the (NCO/OH) ratio, can be determined according to formula (11) below. In the formula (11), OHV is the hydroxyl value of the polyol.

[Math. 5]

$$(\mathrm{NCO/OH})\ \text{ratio} = \frac{Z}{\dfrac{\mathrm{OHV}}{\mathrm{NCO\%}} \times 7.5} \qquad (11)$$

Further, the first agent and the second agent are preferably used in combination so that the glass transition temperature of a cured coating film is -30°C or more and 80°C or less, more preferably used in combination so that the glass transition temperature is 0°C or more and 70°C or less, and still more preferably used in combination so that the glass transition temperature is 25°C or more and 70°C or less. The glass transition temperature exceeding 80°C may decrease the adhesion to a substrate due to a decrease in flexibility of a cured coating film near room temperature. While the glass transition temperature lower than -30°C may cause violet molecular motion of a cured coating film near room temperature and thus cause unsatisfactory cohesive force. Both cases may lead to a decrease in adhesive force.

(Form)

The adhesive of the present invention may have any one of the forms of a solvent type, a solventless type, and an aqueous type. In the case of the solvent type, a solvent may be used as a reaction solvent during production of the

first agent and/or the second agent. Further, the solvent is used as a diluent during coating. Examples of the solvent which can be used include esters such as ethyl acetate, butyl acetate, cellosolve acetate, and the like; ketones such as acetone, methyl ethyl ketone, isobutyl ketone, cyclohexanone, and the like; ethers such as tetrahydrofuran, dioxane, and the like; aromatic hydrocarbons such as toluene, xylene, and the like; halogenated hydrocarbons such as methylene chloride, ethylene chloride, and the like; dimethyl sulfoxide; dimethyl sulfamide; and the like. A preferred solvent may be selected according to the types of the first agent and the second agent, but ethyl acetate and methyl ethyl ketone are preferably used. In the case of the solventless type, neither of the first agent and the second agent use a solvent with a low boiling point. In this case, a high-boiling-point solvent not contributing to the reaction may be contained for optimizing the coating viscosity. In the case of the aqueous type, an example of the first agent is an agent prepared by dispersing an emulsified compound in a solvent mainly containing water, and an example of the second agent is an agent prepared by dispersing a blocked isocyanate in a solvent mainly containing water.

(Additive)

An adhesive composition of the present invention may contain various additives within a range in which the adhesive force is not impaired. Examples of the additives include an inorganic filler such as silica, alumina, aluminum flakes, glass flakes, or the like, a stabilizer (an antioxidant, a thermal stabilizer, an ultraviolet absorber, or the like), a plasticizer, an anti-static agent, a lubricant, an anti-blocking agent, a coloring agent, a filler, a crystal nucleating agent, and the like.

A known acid anhydride can also be used as an additive for improving the acid resistance of the adhesive layer. Examples of the acid anhydride include phthalic anhydride, succinic anhydride, HET anhydride, himic anhydride, maleic anhydride, tetrahydrophthalic anhydride, hexahydrophthalic anhydride, tetrabromophthalic anhydride, tetrachlorophthalic anhydride, trimellitic anhydride, pyromellitic anhydride, benzophenone tetracarboxylic anhydride, 2,3,6,7-naphthalenetetracarboxylic dianhydride, 5-(2,5-oxotetrahydrofuryl)-3-methyl-3-cyclohexene-1,2-dicarobylic anhydride, styrene-maleic anhydride copolymer, and the like.

Further, a tackifier such as a xylene resin, a terpene resin, a phenol resin, a rosin resin, or the like may be added for improving adhesion to various film materials immediately after coating. When this agent is added, the content is preferably within a range of 0.01 parts by mass or more and 5 parts by mass or less relative to 100 parts by mass of the total of main agents and a curing agent.

When the two-component adhesive of the present invention is required to have the gas barrier property, it preferably contains at least one of a plate-shaped inorganic compound and crystalline polyester.

Examples of the plate-shaped inorganic compound include hydrous silicates (phyllosilicate minerals and the like), kaolinite-serpentine group clay minerals (halloysite, kaolinite, endellite, dickite, nacrite, antigorite, chrysotile, and the like), pyrophyllite-talc group (pyrophyllite, talc, kerolite, and the like), smectite-group clay minerals (montmorillonite, beidellite, nontronite, saponite, hectorite, sauconite, stevensite, and the like), vermiculite-group clay minerals (vermiculite and the like), mica or mica-group clay minerals (mica such as muscovite, phlogopite, and the like, margarite, tetrasilylic mica, taeniolite, and the like), chlorite group (cookeite, sudoite, clinochlore, chamosite, nimite, and the like), hydrotalcite, plate-shaped barium sulfate, boehmite, polyaluminum phosphate, and the like. These minerals may be either natural clay minerals or synthetic clay minerals. The plate-shaped inorganic compounds can be used alone or in combination of two or more.

The amount of the plate-shaped inorganic compound is not particularly limited as long as the gas barrier property is improved, but the amount is preferably 5 parts by mass or more and 50 parts by mass or less relative to 100 parts by mass of the total mass of the first agent, the second agent, and the plate-shaped inorganic compound.

The crystalline polyester is not particularly limited, and known crystalline polyester can be used. In the specification of the invention, the term "crystalline" represents that the endothermic quantity at an endothermic peak corresponding to a melting point in differential thermal analysis method (DSC) is 20 J/g or more and more preferably 30 J/g or more under a temperature-rising condition of 20 °C/min. The crystalline polyester satisfies these crystalline conditions.

The crystalline polyester is preferably added within a range of 2% by mass or more and 50% by mass or less and more preferably 5% by mass or more and 40% by mass or less relative to the total mass including amorphous polyester used as the first agent. Thus, both the improved gas barrier property and the coatability as a dry laminate adhesive can be satisfied.

<Two-component coating agent>

(Two-component coating agent)

The two-component curable composition described above can be applied to a two-component coating agent. In use as a coating agent, the number-average molecular weight of the first agent is preferably 1,000 or more and 50,000

or less, more preferably 1,200 or more and 40,000 or less, and still more preferably 1,500 or more and 30,000 or less. In mixing the first agent and the second agent, the (second functional group/first functional group) ratio is the same as in the two-component adhesive described above.

(Form)

The coating agent of the present invention may have any one of the forms of a solvent type, a solventless type, and an aqueous type. In the case of the solvent type, a solvent may be used as a reaction solvent during production of the first agent and/or the second agent. Further, the solvent is used as a diluent during coating. Examples of the solvent which can be used include the same as those used for the adhesive described above. In the case of the solventless type, neither of the first agent and the second agent use a solvent with a low boiling point. In this case, a high-boiling-point solvent not contributing to the reaction may be contained for optimizing the coating viscosity. In the case of the aqueous type, an example of the first agent is an agent prepared by dispersing an emulsified compound in a solvent mainly containing water, and an example of the second agent is an agent prepared by dispersing a blocked isocyanate in a solvent mainly containing water.

(Additive)

If required, a curing accelerator may be added to the coating agent of the present invention. Examples of the curing accelerator include urethanization catalysts such as cobalt naphthenate, zinc naphthenate, stannous chloride, tetra-n-butyltin, tri-n-butyltin acetate, n-butyltin trichloride, trimethyltin hydroxide, dimethyltin dichloride, dibutyltin acetate, dibutyltin dilaurate, tin octenoate, and the like.

In addition, a lubricant, an anti-blocking agent, an ultraviolet absorber, a photostabilizer, an anti-static agent, an anti-fogging agent, a coloring agent, and the like can be properly added.

<Laminate>

The two-component adhesive of the present invention can be used as an adhesive for various applications to a film substrate, paper, metals, etc. The two-component coating agent of the present invention can be used as a coating agent for various applications to a film substrate, paper, metals, etc.

The use of two-component adhesive of the present invention as an adhesive for a film laminate is described below as an example.

A film which can be used as a substrate for a film laminate is not particularly limited, and a thermoplastic resin film can be properly selected according to application. Examples of a film for food packaging include a PET film, a polystyrene film, a polyamide film, a polyacrylonitrile film, polyolefin films such as polyethylene films (LLDPE: a low-density polyethylene film, HDPE: a high-density polyethylene film), polypropylene films (CPP: an unstretched polypropylene film, OPP: biaxially stretched polypropylene film), and the like, a polyvinyl alcohol film, an ethylene-vinyl alcohol copolymer film, and the like. These may be stretched films. A general method for stretching treatment includes forming a sheet by melt-extrusion of a resin using an extrusion film-forming method or the like and then performing simultaneous biaxial stretching or sequential biaxial stretching. In the case of sequential biaxial stretching, in general, longitudinal stretching treatment is first performed, and next lateral stretching treatment is performed. Specifically, a widely-used method includes a combination of longitudinal stretching using a speed difference between rolls and lateral stretching using a tenter.

The film may be combined with a film laminated with a vapor-deposited layer of a metal, such as aluminum or the like, a metal oxide, such as silica, alumina, or the like, or a barrier film containing a gas barrier layer of polyvinyl alcohol, ethylene-vinyl alcohol copolymer, vinylidene chloride, or the like. By using such a film, it is possible to form a laminate having the barrier property for water vapor, oxygen, alcohol, inert gas, volatile organic substances (odor), and the like.

If required, the surface of the film may be subjected to various surface treatments such as flame treatment, corona discharge treatment, and the like so as to form an adhesive layer having no defects such as film breakage, cissing, and the like.

A coating method is not particularly limited, and a known method can be used. For example, in the case of the solvent-type which permits viscosity adjustment, coating is frequently performed by a gravure roll coating method. In the case of the solventless type unsuitable for gravure roll coating because of high viscosity at room temperature, coating can be performed by using a roll coater under heating. When the roll coater is used, coating is preferably performed under heating at room temperature to about 120°C so that the viscosity of the adhesive of the present invention is about 500 mPa·s to 2500 mPa·s.

The adhesive of the present invention can be preferably used as an adhesive for a laminate film formed by

bonding together a plurality of resin films of the same type or different types. The resin films may be properly selected according to the purpose. For example, in use as a packaging material, examples of the resin films include:

a composite film including two layers using a thermoplastic resin film selected from PET, OPP, and polyamide as an outermost layer, and a thermoplastic resin film selected from an unstretched polypropylene (abbreviated as "OPP" hereinafter) and low-density polyethylene film (abbreviated as "LLDPE" hereinafter) as an innermost layer; a composite film including three layers using a thermoplastic resin film selected from PET, polyamide, and OPP for forming an outermost layer, a thermoplastic resin film selected from OPP, PET, and polyamide for forming an intermediate layer, and a thermoplastic resin film selected from CPP and LLDPE for forming an innermost layer; a composite film including four layers using a thermoplastic resin film selected from OPP, PET, and polyamide, for forming an outermost layer, a thermoplastic resin film selected from PET and nylon for forming a first intermediate layer, a thermoplastic resin film selected from PET and polyimide for forming a second intermediate layer, and a thermoplastic resin film selected from LLDPE and CPP for forming an innermost layer; and the like.

The laminate film can be produced by applying the adhesive of the present invention to one of the thermoplastic resin films and bonding the other thermoplastic resin film by lamination. Usable examples of the lamination method include known methods such as dry lamination, non-solvent lamination, extrusion lamination, and the like.

In the dry laminate, the adhesive of the present invention is applied to one of the substrate films by a gravure roll method, and the other substrate film is laminated. The laminate roll temperature is preferably too temperature to about 60°C.

In the case of non-solvent lamination, the laminate film can be produced by applying the adhesive of the present invention, which is previously heated at room temperature to about 120°C, to a substrate film by using a roll such as a roll coater heated to room temperature to about 120°C or the like, and then immediately laminating another film material on the surface. The lamination pressure is preferably about 10 to 300 kg/$cm^2$.

In the case of extrusion lamination, the laminate film can be produced by applying an organic solvent solution of the adhesive of the present invention as an adhesive auxiliary (anchor coating agent) to a substrate film by using a roll such as a gravure roll or the like, drying the solvent at room temperature to 140°C, performing curing reaction, and then laminating a molten polymer material by using a extruder. Preferred examples of the polymer material to be molten include polyolefin-based resins such as a low-density polyethylene resin, a linear low-density polyethylene resin, an ethylene-vinyl acetate copolymer resin, and the like.

The laminate film formed as described above is preferably subjected to aging treatment. For example, when a polyisocyanate compound is used as a curing agent, the aging conditions include room temperature to 80°C and 12 to 240 hours. During the curing treatment, the adhesive strength is enhanced.

The laminate formed by using the two-component adhesive of the present invention exhibits the same adhesive strength as a laminate formed by using a usual two-component adhesive.

Also, the two-component adhesive of the present invention is used mixing at the (second functional group/first functional group) ratio of less than 1, and thus the laminate formed by using the two-component adhesive of the present invention forms an adhesive layer having higher reactivity after curing as compared with the use of a usual two-component adhesive. In other words, there is a small probability that the unreacted second agent having high toxicity remains. Therefore, even when the laminate is used for packaging a food requiring boil retort treatment, elusion of a toxic compound derived from the remaining second agent can be suppressed.

A gas-barrier film is slightly permeable to gas, and thus a laminate formed by using such a film easily produces air bubbles due to the gas which stays between films and is produced by reaction of the second agent with surrounding (for example, air) water. However, the two-component adhesive of the present invention is used at the (second functional group/first functional group) ratio of as low as less than 1, thereby suppressing the occurrence of air bubbles and forming a laminate with a good appearance. The suppressed occurrence of air bubbles is also useful for forming a laminate by using a gas-barrier film.

The excellent gas barrier property can be imparted to a laminate by using films each having a vapor-deposited layer laminated on a resin film and composed of a metal, such as aluminum or the like, or a metal oxide, such as silica, alumina, or the like, and laminating together the films by using the two-component adhesive of the present invention so that the vapor-deposited layers face each other. The film having a vapor-deposited layer which is composed of a metal oxide and laminated on a resin film has pinholes present in the vapor-deposited layer, and thus the sufficient gas-barrier property cannot be secured by a single body. Therefore, a laminate of a plurality of layers is used, but when vapor-deposited layers are laminated together so as to face each other by using a two-component adhesive which is generally used and has a (second functional group/first functional group) ratio of 1.0 or more, pinholes are connected to each other by the air bubbles caused by the excessive second agent, thereby failing to secure the satisfactory gas-barrier property. On the other hand, the two-component adhesive of the present invention causes substantially no occurrence of air bubbles, and a laminate having an excellent gas-barrier property in addition to an excellent appearance can be

formed.

In addition, when a laminate is formed by laminating gas-barrier films together by using the two-component adhesive of the present invention which uses a material exhibiting the gas-barrier property as each of the first agent and the second agent, the laminate can be provided with a water vapor barrier property and a more excellent barrier property for oxygen, alcohol, inert gas, odors caused by volatile organic solvents, etc.

An alcohol which can be cut off by the laminate described above is not particularly limited as long as it is a material classified in general alcohols having a structure in which a hydroxyl group is bonded to an alkyl chain at at least one position. The alcohol may be a monohydric alcohol or a polyhydric alcohol. Examples of a monohydric alcohol include methanol, ethanol, 1-propanol, 2-propanol, butanol, pentanol, neopentyl glycol, hexanol, benzyl alcohol, allyl alcohol, cyclohexanol, and the like. Examples of a polyhydric alcohol include ethylene glycol, propanediol, butanediol, glycerin, trimethylpropane, and the like. Further examples include amino alcohols such as N,N-diethylethanolamine, N,N-dimethylethanolamine, N-methyldiethanolamine, N-ethylethanolamine, and the like, ether group-containing alcohol compounds such as diethylene glycol, triethylene glycol, and the like.

The laminate described above can be particularly preferably used for alcohols which are in gaseous to liquid states in a room temperature region.

Examples of inert gas which can be cut off by the laminate described above include nitrogen gas, carbon dioxide gas, rare gases such as helium, neon argon, krypton, xenon, radon, and the like. Such inert gas hardly causes a chemical change and not only is inert to foods and the like but also can prevent foods from contacting with surrounding oxygen and water vapor, and thus the inert gas is used for the purpose of maintaining food taste, holding contents, preventing oxidation, etc.

Examples of a volatile organic compound (odor) which can be cut off by the laminate described above include those related to cocoa, soy sauce, sauce, miso, coffee, limonene, methyl salicylate, menthol, cheese, fragrances, shampoo, rinse, detergents, softeners, sanitary field containing a fragrant component such as soaps and the like, pet foods, insecticides, aromatics, hair dyes, perfumes, agricultural chemicals, and the like.

## EXAMPLES

The present invention is specifically described below by giving examples in order to make the present invention easy to understand, but the present invention is not limited to only the examples. In each of the examples, "parts" and "%" are on a mass basis unless otherwise specified.

### <Synthesis of first agent>

A first agent was synthesized according to each of Synthesis Examples 1 to 14. In Synthesis Examples 1 to 11, the branching coefficient was calculated by using the formulae (8) and (9) described above wherein X = OH and Y = COOH. In Synthesis Examples 12 to 14, the branching coefficient was calculated by using the formulae (7) and (9) described above wherein X = COOH and Y = OH.

### (Synthesis Example 1) Method for producing (TMP/EG/oPA = 1/3/3)

In a polyester reactor provided with a stirrer, a nitrogen gas inlet tube, etc., 444.36 parts of phthalic anhydride, 134.17 parts of trimethylolpropane, 195.52 parts of ethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 5 mgKOH/g or less, esterification reaction was terminated to produce polyester polyol (TMP/EG/oPA = 1/3/3) having a number-average molecular weight of 710, an acid value of 0.38 mgKOH/g, and a hydroxyl value of 237 mgKOH/g. The branching coefficient $\alpha$ of the resultant resin was determined to be 0.40 based on the composition ratio determined by $^{13}C$-NMR and the acid value.

### (Synthesis Example 2) Method for producing (THEI/EG/oPA = 1/3/3)

In a polyester reactor provided with a stirrer, a nitrogen gas inlet tube, etc., 444.36 parts of phthalic anhydride, 261.23 parts of trishydroxyethyl isocyanurate, 195.52 parts of ethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 5 mgKOH/g or less, esterification reaction was terminated to produce polyester polyol (THEI/EG/oPA = 1/3/3) having a number-average molecular weight of 837, an acid value of 1.0 mgKOH/g, and a hydroxyl value of 201 mgKOH/g. The branching coefficient $\alpha$ of the resultant resin was determined to be 0.40 based on the composition ratio determined

by $^{13}C$-NMR and the acid value.

(Synthesis Example 3) Method for producing (PE/EG/oPA = 1/4/4)

In a polyester reactor provided with a stirrer, a nitrogen gas inlet tube, etc., 592.48 parts of phthalic anhydride, 136.15 parts of pentaerythritol, 260.70 parts of ethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 30 mgKOH/g or less, esterification reaction was terminated to produce polyester polyol (PE/EG/oPA = 1/4/4) having a number-average molecular weight of 837, an acid value of 25.0 mgKOH/g, and a hydroxyl value of 248 mgKOH/g. The branching coefficient $\alpha$ of the resultant resin was determined to be 0.38 based on the composition ratio determined by $^{13}C$-NMR and the acid value.

(Synthesis Example 4) Method for producing (GLY/EG/oPA = 1.3/4/4.5)

In a polyester reactor provided with a stirrer, a nitrogen gas inlet tube, etc., 666.54 parts of phthalic anhydride, 119.72 parts of purified glycerin, 260.70 parts of ethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 3 mgKOH/g or less, esterification reaction was terminated to produce polyester polyol (GLY/EG/oPA = 1.3/4/4.5) having a number-average molecular weight of 953, an acid value of 2.0 mgKOH/g, and a hydroxyl value of 195 mgKOH/g. The branching coefficient $\alpha$ of the resultant resin was determined to be 0.50 based on the composition ratio determined by $^{13}C$-NMR and the acid value.

(Synthesis Example 5) Method for producing (GLY/HG/oPA = 1.3/4/4.5)

In a polyester reactor provided with a stirrer, a nitrogen gas inlet tube, etc., 666.54 parts of phthalic anhydride, 119.72 parts of purified glycerin, 496.32 parts of hexyl glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 30 mgKOH/g or less, esterification reaction was terminated to produce polyester polyol (GLY/HG/oPA = 1.3/4/4.5) having a number-average molecular weight of 1177, an acid value of 2.0 mgKOH/g, and a hydroxyl value of 147 mgKOH/g. The branching coefficient $\alpha$ of the resultant resin was determined to be 0.49 based on the composition ratio determined by $^{13}C$-NMR and the acid value.

(Synthesis Example 6) Method for producing (GLY/EG/AA = 1.3/4/4.5)

In a polyester reactor provided with a stirrer, a nitrogen gas inlet tube, etc., 531.40 parts of adipic acid, 119.72 parts of purified glycerin, 260.70 parts of ethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 3 mgKOH/g or less, esterification reaction was terminated to produce polyester polyol (GLY/EG/AA = 1.3/4/4.5) having a number-average molecular weight of 737, an acid value of 2.0 mgKOH/g, and a hydroxyl value of 230 mgKOH/g. The branching coefficient $\alpha$ of the resultant resin was determined to be 0.50 based on the composition ratio determined by $^{13}C$-NMR and the acid value.

(Synthesis Example 7) Method for producing (GLY/DEG/oPA = 1.3/4/4.5)

In a polyester reactor provided with a stirrer, a nitrogen gas inlet tube, etc., 666.54 parts of phthalic anhydride, 119.72 parts of purified glycerin, 432.96 parts of diethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 3 mgKOH/g or less, esterification reaction was terminated to produce polyester polyol (GLY/DEG/oPA = 1.3/4/4.5) having a number-average molecular weight of 1130, an acid value of 2.0 mgKOH/g, and a hydroxyl value of 150 mgKOH/g. The branching coefficient $\alpha$ of the resultant resin was determined to be 0.50 based on the composition ratio determined by $^{13}C$-NMR and the acid value.

(Synthesis Example 8) Method for producing (GLYl/EG/oPA = 2.2/4/5.1)

In a polyester reactor provided with a stirrer, a nitrogen gas inlet tube, etc., 755.41 parts of phthalic anhydride, 202.60 parts of purified glycerin, 260.70 parts of ethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 3 mgKOH/g or less, esterification reaction was terminated to produce polyester polyol (GLY/EG/oPA = 2.2/4/5.1) having a number-average molecular weight of 1115, an acid value of 2.0 mgKOH/g, and a hydroxyl value of 196 mgKOH/g. The branching coefficient $\alpha$ of the resultant resin was determined to be 0.51 based on the composition ratio determined by $^{13}$C-NMR and the acid value.

(Synthesis Example 9) Method for producing (GLY/EG/HH = 2.2/4/5.1)

In a polyester reactor provided with a stirrer, a nitrogen gas inlet tube, etc., 786.21 parts of hexahydrophthalic anhydride, 202.60 parts of purified glycerin, 260.70 parts of ethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 3 mgKOH/g or less, esterification reaction was terminated to produce polyester polyol (GLY/EG/HH = 2.2/4/5.1) having a number-average molecular weight of 1130, an acid value of 2.0 mgKOH/g, and a hydroxyl value of 201 mgKOH/g. The branching coefficient $\alpha$ of the resultant resin was determined to be 0.51 based on the composition ratio determined by $^{13}$C-NMR and the acid value.

(Synthesis Example 10) Method for producing (GLY/EG/MA = 2.2/4/5.1)

In a polyester reactor provided with a stirrer, a nitrogen gas inlet tube, etc., 500.10 parts of maleic anhydride, 202.60 parts of purified glycerin, 260.70 parts of ethylene glycol, titanium tetraisopropoxide at 100 ppm relative to a total charging amount, and tertiary butylcatechol at 500 ppm relative to a total charging amount were charged and gradually heated so that the temperature of an upper portion of a rectifier did not exceed 100 degrees, and then the internal temperature was kept at 200 degrees. When the acid value became 25 mgKOH/g or less, esterification reaction was terminated to produce polyester polyol (GLY/EG/MA = 2.2/4/5.1) having a number-average molecular weight of 850, an acid value of 20.0 mgKOH/g, and a hydroxyl value of 210 mgKOH/g. The branching coefficient $\alpha$ of the resultant resin was determined to be 0.46 based on the composition ratio determined by $^{13}$C-NMR and the acid value.

(Synthesis Example 11) Method for producing (GLY/CHDM/oPA = 2.2/4/5.1)

In a polyester reactor provided with a stirrer, a nitrogen gas inlet tube, etc., 755.41 parts of phthalic anhydride, 202.60 parts of purified glycerin, 588.37 parts of cyclohexane dimethanol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 3 mgKOH/g or less, esterification reaction was terminated to produce polyester polyol (GLY/CHDM/oPA = 2.2/4/5.1) having a number-average molecular weight of 1430, an acid value of 1.0 mgKOH/g, and a hydroxyl value of 196 mgKOH/g. The branching coefficient $\alpha$ of the resultant resin was determined to be 0.51 based on the composition ratio determined by $^{13}$C-NMR and the acid value.

(Synthesis Example 12) Method for producing (TMT/EG/oPA = 1/6/3)

In a polyester reactor provided with a stirrer, a nitrogen gas inlet tube, etc., 444.36 parts of phthalic anhydride, 192.13 parts of trimellitic anhydride, 391.05 parts of ethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 2 mgKOH/g or less, esterification reaction was terminated to produce polyester polyol (TMT/EG/oPA = 1/6/3) having a number-average molecular weight of 850, an acid value of 1.0 mgKOH/g, and a hydroxyl value of 198 mgKOH/g. The branching coefficient $\alpha$ of the resultant resin was determined to be 0.50 based on the composition ratio determined by $^{13}$C-NMR and the acid value.

(Synthesis Example 13) Method for producing (PMT/EG/oPA = 1/8/4)

In a polyester reactor provided with a stirrer, a nitrogen gas inlet tube, etc., 592.48 parts of phthalic anhydride,

218.12 parts of pyromellitic anhydride, 521.40 parts of ethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 30 mgKOH/g or less, esterification reaction was terminated to produce polyester polyol (PMT/EG/oPA = 1/8/4) having a number-average molecular weight of 1090, an acid value of 26.0 mgKOH/g, and a hydroxyl value of 154 mgKOH/g. The branching coefficient α of the resultant resin was determined to be 0.42 based on the composition ratio determined by $^{13}$C-NMR and the acid value.

(Synthesis Example 14) Method for producing (HTMT/EG/oPA = 1/6/3)

In a polyester reactor provided with a stirrer, a nitrogen gas inlet tube, etc., 444.36 parts of phthalic anhydride, 198.17 parts of hydrogenated trimellitic anhydride, 391.05 parts of ethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 2 mgKOH/g or less, esterification reaction was terminated to produce polyester polyol (HTMT/EG/oPA = 1/6/3) having a number-average molecular weight of 853, an acid value of 1.0 mgKOH/g, and a hydroxyl value of 197 mgKOH/g. The branching coefficient α of the resultant resin was determined to be 0.50 based on the composition ratio determined by $^{13}$C-NMR and the acid value.

(Synthesis Example 15) Method for producing (EG/oPA = 5.36/4.36) EP900

In a polyester reactor provided with a stirrer, a nitrogen gas inlet tube, etc., 648.50 parts of phthalic anhydride, 359.31 parts of ethylene glycol, and 100 ppm of titanium tetraisopropoxide relative to a total charging amount were charged and gradually heated so that the temperature of an upper portion of a rectifier did not exceed 100 degrees, and then the internal temperature was kept at 220 degrees. When the acid value became 2 mgKOH/g or less, esterification reaction was terminated to produce polyester polyol (EG/oPA = 5.36/4.36) having a number-average molecular weight of 900, an acid value of 1.0 mgKOH/g, and a hydroxyl value of 124.7 mgKOH/g. The resultant resin does not contain a branched structure as shown by the monomer composition ratio and thus has a branching coefficient α of 0.

A test was carried out by using, as the first agent, DIC DRY LX-703VL (manufactured by DIC Graphics Corporation: polyester polyol, ethyl acetate, nonvolatile content/ about 62%) in addition to the polyol compounds synthesized in Synthesis Examples 1 to 15. DIC DRY LX-703VL does not contain a branched structure based on the results of composition analysis and thus has a branching coefficient α of 0.

<Synthesis of second agent>

(Synthesis Example 16) Method for producing difunctionalterminated isocyanate resin composition "(EGoPA)nTDI2"

In a four-neck flask provided with a thermometer, a stirrer, an inert gas inlet, an air inlet, and a reflux condenser, 900 parts of the difunctional polyester polyol EP900 produced in Synthesis Example 15 was placed and dissolved in 225 parts of ethyl acetate to prepare an ethyl acetate solution of polyester polyol. Further, 188 parts of toluene diisocyanate (abbreviated as "TDI") and 235 parts of ethyl acetate were added to the resultant solution, followed by reaction at 75°C for 3 hours under a nitrogen stream. Since the NCO equivalent became 630 substantially equal to the theoretical equivalent value, the reaction mixture was cooled to 50°C to produce an isocyanate composition having a nonvolatile content of 80%, a number-average molecular weight of 1276, and a design functional terminal number of 2. The NCO% of the compound was 5.0.

<Formation of laminate>

As described below, a laminate of each of Examples 1 to 14 was formed by using an adhesive produced by mixing the first agent having a branching coefficient of 1/f or more with the second agent having an average number of functional groups of 2.5 or more within the (second functional group/first functional group) ratio range of 0.15 or more and 0.60 or less.

(EXAMPLE 1)

The polyester polyol synthesized in Synthesis Example 1 was used as the first agent and dissolved in ethyl acetate with a composition shown in Table 1, and then HA-300 was added as the second agent so that the NCO/OH ratio was 0.15 or more and 0.60 or less, thereby producing an adhesive. The resultant adhesive was applied to a corona-treated surface of a PET film having a thickness of 12 μm by using a bar coater #8, and the diluent solvent was evaporated

by drying with a dryer set to a temperature of 70°C, thereby forming a composite film. The composite film was dry-laminated on a corona surface of an unstretched polyethylene film at a temperature of 40°C, a pressure of 0.4 MPa, and a lamination speed of 40 m/min. The resultant laminate was cured (aging) at 40°C for 3 days to form a PET/adhesive/unstretched polyethylene laminate.

Also, the same adhesive as described above was applied to a transparent vapor-deposited surface of a transparent vapor-deposited PET film having a thickness of 12 μm by using a bar coater #8, and then the diluent solvent was evaporated by drying with a dryer set to a temperature of 70°C, thereby forming a composite film. The composite film was dry-laminated on a transparent vapor-deposited surface of a transparent vapor-deposited PET film at a temperature of 40°C, a pressure of 0.4 MPa, and a lamination speed of 40 m/min. The resultant laminate was cured (aging) at 40°C for 3 days to form a transparent vapor-deposited PET/adhesive/transparent vapor-deposited PET laminate in which both the vapor-deposited surfaces were in contact with the adhesive.

The NCO/OH ratio corresponds to the (second functional group/first functional group) ratio.

(EXAMPLES 2 to 14)

Two types of laminates including a PET/adhesive/unstretched polyethylene laminate and a transparent vapor-deposited PET/adhesive/transparent vapor-deposited PET laminate were formed by the same method as in Example 1 except that the types and mixing amounts of the first agent and second agent used were as shown in Tables 1 to 3.

Laminates of Comparative Examples 1 to 6 were formed as follows.

(COMPARATIVE EXAMPLES 1 to 6)

Two types of laminates including a PET/adhesive/unstretched polyethylene laminate and a transparent vapor-deposited PET/adhesive/transparent vapor-deposited PET laminate were formed by the same method as in Example 1 except that the types and mixing amounts of the first agent and second agent used were as shown in Table 4.

Also, a laminate of each of Examples 15 to 28 was formed by using an adhesive produced by mixing the first agent having a branching coefficient of 1/f or more with the second agent containing 85% or more of a difunctional compound in terms of functional group content within a (second functional group/first functional group) ratio range of 0.6 or more and 0.95 or less.

The second agents used in the examples and the comparative examples are as follows.

(Second agent having average number of functional groups of 2.5 or more)

(HA-300)

Allophanate of hexamethylene diisocyanate (HDI) manufactured by BASF Co., Ltd. and having an average number of NCO functional groups of 3.0, a nonvolatile content of 100%, and a NCO% of 17.5%.

(HB-300)

Biuret of hexamethylene diisocyanate (HDI) manufactured by BASF Co., Ltd. and having an average number of NCO functional groups of 3.0, a nonvolatile content of 100%, and a NCO% of 17.5%.

(L-75)

Adduct of trimethylolpropane and 2,6-tolylene diisocyanate (TDI) manufactured by Sumitomo Bayer Urethane Co., Ltd. and having an average number of NCO functional groups of 3.0, a nonvolatile content of 75.0%, a NCO% of 13.4%, and an ethyl acetate solvent.

(D110N)

Trimethylolpropane adduct of metaxylylene diisocyanate (XDI) manufactured by Mitsui Chemicals, Inc. and having an average number of NCO functional groups of 3.0, a nonvolatile content of 75.0%, a NCO% of 11.5%, and an ethyl acetate solvent.

(Lupranate MB-5S)

Polymeric 4,4'-diphenylmethane diisocyanate manufactured by BASF Co., Ltd. and having an average number

of NCO functional groups of 2.6, a nonvolatile content of 100%, and a NCO% of 30%.

(KR-90)

Hexamethylene diisocyanate manufactured by DIC Graphics Corporation and having an average number of NCO functional groups of 3.0, a nonvolatile content of 90%, a NCO% of 30%, and an ethyl acetate solvent.

The films used in the examples and the comparative examples are as follows.

(PET film)

"E-5100" manufactured by Toyobo Co., Ltd. and having a thickness of 12 μm.

(Unstretched polyethylene film)

"TUX-HC" manufactured by Mitsui Chemicals Tohcello, Inc., and having a thickness of 60 μm.

(Transparent vapor-deposited PET)

Barrialox 1011HG (manufactured by Toray Advanced Film Co., Ltd.) having a thickness of 12 μm and no overcoat layer.

<Evaluation>

The laminates after completion of aging were evaluated as described below, and the results are summarized in Tables 1 to 4.

(Method for measuring laminate strength)

The PET/adhesive/unstretched polyethylene laminate was cut into a width of 15 mm in parallel with the coating direction, and the stretched film and the unstretched film were separated by a 180-degree peeling method using a Tensilon universal testing machine manufactured by Orientec Corporation at an ambient temperature set to 25°C and a peeling speed set to 300 mm/min. In this test, tensile strength was regarded as laminate strength. The unit of adhesive strength was N/15 mm.

(Method for measuring seal strength)

The PET/adhesive/unstretched polyethylene laminates were placed one on the other so that the unstretched polyethylene films were on the inner side and heat-sealed by using a heat sealer (Tester Sangyo Co., Ltd., TP-201-B) and a seal bar having a width of 10 mm under the conditions of 0.1 Mpa, 1 second, 180°C. The resultant laminate was cut into a width of 15 mm, and the heat-sealed parts were separated by the same testing machine under the same conditions as in the measurement of laminate strength described above. In this test, tensile strength was regarded as heat-seal strength. The unit of adhesive strength was N/15 mm.

The heat-seal strength of 35 N/15 mm or more can be considered as high strength.

(Method for determining laminate appearance)

As a result of visual observation of the appearance of transparent vapor-deposited PET/adhesive/transparent vapor-deposited PET configuration, the uniform and transparent appearance was determined as "A", and the non-uniform and opaque appearance due to the air bubbles present in the laminate was determined as "C". In addition, an intermediate state between these was determined as "B".

(Method for determining boiling resistance test)

The PET/adhesive/unstretched polyethylene laminate was cut into a size of 5 cm × 10 cm. The cut laminate was folded into two parts with a 5-cm square size, and the two parts were laminated so that the unstretched polyethylene film surfaces were on the inside and then heat-sealed on two of the sides by using a heat sealer (Tester Sangyo Co., Ltd., TP-201-B) to form a bag. Then, 3 g of water was injected into the bag, and the bag was closed by heat-sealing on the one remaining side using the heat sealer to form a pouch in which water was sealed. The pouch was immersed in

boiling water of 95°C for 30 minutes and boiled, and then taken out. When the state of the pouch taken out was not changed from the state before boiling, the boiling resistance was determined as "A", and when abnormality such as delamination or the like occurred, the boiling resistance was determined as "B".

[Table 1]

| | | | | Example 1 | Example 2 | Example 3 | Example 4 | Example 5 |
|---|---|---|---|---|---|---|---|---|
| First agent | | α | Mn | | | | | |
| | Synthesis Example 1 | 0.4 | 710 | 10 | | | | |
| | Synthesis Example 2 | 0.4 | 837 | | 10 | | | |
| | Synthesis Example 3 | 0.38 | 905 | | | 10 | | |
| | Synthesis Example 4 | 0.5 | 953 | | | | 10 | |
| | Synthesis Example 5 | 0.49 | 1177 | | | | | 10 |
| Second agent | | Average number of functional groups | | | | | | |
| | HA-300 | 3 | | 2.03 | | | | |
| | HB-300 | 3 | | | 3.45 | | | |
| | L-75 | 3 | | | | 3.58 | | |
| | D110N | 3 | | | | | | 2.4 |
| | MB-5S | 2.6 | | | | | 1.71 | |
| Solvent | Ethvl acetate | | | 12.03 | 13.45 | 11.79 | 11.71 | 11.2 |
| NCO/OH ratio | | | | 0.2 | 0.4 | 0.25 | 0.35 | 0.25 |
| Evaluation | Laminate strength | | | 6.2 | 6.1 | 4.9 | 4.3 | 5.8 |
| | Seal strength | | | 45 | 45 | 37 | 35 | 40 |
| | Appearance of laminate | | | A | A | A | A | A |

[Table 2]

| | | | | Example 6 | Example 7 | Example 8 | Example 9 | Example 10 |
|---|---|---|---|---|---|---|---|---|
| First agent | | α | Mn | | | | | |
| | Synthesis Example 6 | 0.5 | 737 | 10 | | | | |
| | Synthesis Example 7 | 0.5 | 1130 | | 10 | | | |
| | Synthesis Example 8 | 0.51 | 1115 | | | 10 | | |
| | Synthesis Example 9 | 0.51 | 1130 | | | | 10 | |
| | Synthesis Example 10 | 0.46 | 850 | | | | | 10 |
| Second agent | | Average number of functional groups | | | | | | |
| | HA-300 | 3 | | 1.97 | | | | 2.7 |
| | HB-300 | 3 | | | 1.16 | | | |
| | L-75 | 3 | | | | 3.96 | | |
| | D110N | 3 | | | | | 2.36 | |
| | MB-5S | 2.6 | | | | | | |
| Solvent | Ethvl acetate | | | 11.97 | 11.16 | 11.98 | 11.18 | 12.7 |
| NCO/OH ratio | | | | 0.2 | 0.18 | 0.35 | 0.18 | 0.3 |
| Evaluation | Laminate strength | | | 6.5 | 6.5 | 4.7 | 5.3 | 5.9 |
| | Seal strength | | | 43 | 46 | 40 | 39 | 45 |
| | Appearance of laminate | | | A | A | A | A | A |

[Table 3]

| | | | | Example 11 | Example 12 | Example 13 | Example 14 |
|---|---|---|---|---|---|---|---|
| First agent | | α | Mn | | | | |
| | Synthesis Example 11 | 0.51 | 1430 | 10 | | | |
| | Synthesis Example 12 | 0.5 | 850 | | 10 | | |
| | Synthesis Example 13 | 0.49 | 1090 | | | 10 | |
| | Synthesis Example 14 | 0.5 | 853 | | | | 10 |

(continued)

| | | | Example 11 | Example 12 | Example 13 | Example 14 |
|---|---|---|---|---|---|---|
| Second agent | | Average number of functional groups | | | | |
| | HA-300 | 3 | | | | |
| | HB-300 | 3 | | 3.99 | | |
| | L-75 | 3 | | | 4.26 | |
| | D110N | 3 | | | | 3.21 |
| | MB-5S | 2.6 | 2.21 | | | |
| Solvent | Ethvl acetate | | 12.21 | 12.44 | 12.13 | 11.61 |
| NCO/OH ratio | | | 0.45 | 0.47 | 0.48 | 0.25 |
| Evaluation | Laminate strength | | 4.4 | 6.1 | 4.8 | 5.3 |
| | Seal strength | | 35 | 44 | 40 | 43 |
| | Appearance of laminate | | A | A | A | A |

[Table 4]

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| First agent | | α | Mn | | | | | | |
| | Synthesis Example 3 | 0.38 | 905 | 10 | | 10 | | | |
| | Synthesis Example 8 | 0.51 | 1115 | | 10 | | 10 | | |
| | Synthesis Example 15 | 0 | 900 | | | | | 10 | |
| | LX703VL | 0 | 7000 | | | | | | 10 |
| Second agent | | Average number of functional groups | | | | | | | |
| | L-75 | 3 | | 1.43 | 0.57 | 21.46 | 9.05 | | |
| | D110N | 3 | | | | | | 0.25 | |
| | KR-90 | 3 | | | | | | | 0.45 |
| Solvent | Ethyl acetate | | | 10.72 | 10.28 | 20.73 | 14.52 | 10.25 | 5.8 |
| NCO/OH ratio | | | | 0.1 | 0.05 | 1.5 | 0.8 | 0.25 | 0.35 |
| Evaluation | Laminate strength | | | 3.5 | 2.5 | 1.3 | 2.9 | 3.5 | 3.4 |
| | Seal strength | | | 23 | 19 | 35 | 37 | 20 | 24 |
| | Appearance of laminate | | | A | A | C | B | A | A |

<Evalua.tion result>

The results of Examples 1 to 14 show that the laminate produced by using the two-component adhesive of the present invention has excellent laminate strength and seal strength, and the laminate formed by bonding together the transparent vapor-deposited films has an excellent appearance. The conceivable reason for this is that the polyol having a branching coefficient $\alpha$ of 1/f or more is used as the first agent, the isocyanate compound having an average number of functional groups of 2.5 or more is used as the second agent, and the first agent is mixed with the polyisocyanate at a NCO/OH ratio of 0.15 or more and 0.6 or less and cured to form a cured coating film maintaining flexibility without being excessively increased in crosslink density.

Further, the excessive polyisocyanate does not remain in the cured film, and thus there is neither occurrence of carbon dioxide gas due to reaction of remaining water with the polyisocyanate in the aging step and nor occurrence of remaining air bubbles even in a laminate including barrier layers. Therefore, a barrier film having a good appearance can be produced.

On the other hand, the results of Comparative Examples 1 and 2 show that the cured film formed by mixing the first agent with the second agent at a NCO/OH ratio of less than 0.15 is not sufficiently cured due to an excessively small amount of polyisocyanate, and particularly, the seal strength was unsatisfactorily less than 25 N/15 mm.

In addition, the results of Comparative Examples 3 and 4 show that the cured film formed by mixing the first agent with the second agent at a NCO/OH ratio exceeding 0.6 is lack of flexibility due to higher-density crosslinking of the polyester polyol which initially has a high crosslink density, resulting in a laminate strength of as low as less than 2.0 N/15 mm. In addition, the results show that the laminate of the transparent vapor-deposited films has a poor appearance.

Further, Comparative Examples 5 and 6 show that when the polyester polyol having a branching coefficient $\alpha$ of 0 is used as the first agent and cured at a NCO/OH ratio of 0.15 or more and 0.6 or less, curing is unsatisfactory, and thus satisfactory seal strength cannot be obtained.

Industrial Applicability

A two-component curable composition of the present invention can be preferably used for a two-component adhesive, a two-component coating agent, and the like.

A two-component adhesive of the present invention can be preferably used for an adhesive for film laminates such as a packing material and the like, adhesives for various applications such as a solar-cell protecting film, electronic materials such as a gas barrier substrate and the like for display devices, building materials, industrial materials, etc., a sealing agent, a bonding agent, and the like. A two-component coating agent of the present invention can be preferably used for various applications such as improvements in scratch resistance of plastic products, electronic material parts, home appliances, wood products, films, and the like.

## Claims

1. A two-component curable composition comprising:

   a first agent which is produced by reacting a monomer for introducing a branch unit into a molecule with a monomer for introducing a first functional group into a molecular terminal; and
   a second agent which has a second functional group reactable with the first functional group,
   wherein the branching coefficient of the first agent is 1/f or more;
   f is the number of functional groups possessed by a monomer having the largest number of functional groups among monomers for introducing a branch unit in a molecule;
   the average number of second functional groups possessed by the second agent is 2.5 or more; and
   in mixing and using the agents, the equivalent ratio of the second functional group to the first functional group is 0.15 or more and less than 0.5,
   wherein the first functional group is a hydroxyl group, and the second functional group is an isocyanate group; and
   wherein the first agent contains a resin having, as a main skeleton, a polyester structure, a polyester polyurethane structure, or a polyether
   structure;
   wherein the branching coefficient and the equivalent ratio are determined as described in the description.

2. The two-component curable composition according to Claim 1, wherein the branching coefficient of the first agent is 1/(f - 1) or more.

3. The two-component curable composition according to Claim 1 or 2, wherein the branching coefficient of the first agent is 0.6 or less.

4. A two-component adhesive comprising the two-component curable composition according to any one of Claims 1 to 3.

5. The two-component adhesive according to Claim 4, wherein the number-average molecular weight of the first agent is 600 or more and 3000 or less.

6. A two-component coating agent comprising the two-component curable composition according to any one of Claims 1 to 3.

7. The two-component coating agent according to Claim 6, wherein the number-average molecular weight of the first agent is 1,000 or more and 50,000 or less.

8. A laminate comprising:

a first substrate;
a second substrate; and
an adhesive layer which laminates the first substrate and the second substrate,
wherein the adhesive layer is formed by mixing a first agent with a second agent, the first agent is produced by reacting a monomer for introducing a branch unit into a molecule with a monomer for introducing a first functional group into a molecular terminal, the branching coefficient of the first agent is 1/f or more wherein f is the number of functional groups possessed by a monomer having the largest number of functional groups among monomers for introducing a branch unit into a molecule, the second agent has a second functional group reactable with the first functional group and has an average number of second functional groups of 2.5 or more, and in mixing the agents, the equivalent ratio of the second functional group to the first functional group is 0.15 or more and less than 0.5,
wherein the first functional group is a hydroxyl group, and the second functional group is an isocyanate group; and
wherein the first agent contains a resin having, as a main skeleton, a polyester structure, a polyester polyurethane structure, or a polyether structure;
wherein the branching coefficient and the equivalent ratio are determined as described in the description.

9. The laminate according to Claim 8, wherein the first substrate and the second substrate each have a vapor-deposited layer of a metal oxide disposed on a resin film, and the vapor-deposited layer of the first substrate and the vapor-deposited layer of the second substrate are disposed to face each other.

**Patentansprüche**

1. Härtbare Zweikomponenten-Zusammensetzung, umfassend:

ein erstes Mittel, welches durch Umsetzung eines Monomers zur Einführung einer Verzweigungseinheit in ein Molekül mit einem Monomer zur Einführung einer ersten funktionellen Gruppe in ein Molekülende hergestellt wird; und
ein zweites Mittel, welches eine zweite funktionelle Gruppe aufweist, die mit der ersten funktionellen Gruppe umsetzbar ist,
wobei der Verzweigungskoeffizient des ersten Mittels 1/f oder mehr beträgt;
f die Anzahl der funktionellen Gruppen ist, die ein Monomer mit der größten Anzahl funktioneller Gruppen unter den Monomeren zur Einführung einer Verzweigungseinheit in ein Molekül besitzt;
die durchschnittliche Anzahl der zweiten funktionellen Gruppen, die das zweite Mittel besitzt, 2,5 oder mehr beträgt; und
beim Mischen und Verwenden der Mittel das Äquivalenzverhältnis der zweiten funktionellen Gruppe zu der ersten funktionellen Gruppe 0,15 oder mehr und weniger als 0,5 beträgt,
wobei die erste funktionelle Gruppe eine Hydroxylgruppe ist und die zweite funktionelle Gruppe eine Isocyanatgruppe ist; und
wobei das erste Mittel ein Harz enthält, das als Hauptgerüst eine Polyesterstruktur, eine Polyester-Polyurethanstruktur oder eine Polyetherstruktur aufweist,
wobei der Verzweigungskoeffizient und das Äquivalenzverhältnis wie in der Beschreibung beschrieben bestimmt

werden.

2. Härtbare Zweikomponenten-Zusammensetzung nach Anspruch 1, wobei der Verzweigungskoeffizient des ersten Mittels 1/(f - 1) oder mehr beträgt.

3. Härtbare Zweikomponenten-Zusammensetzung nach Anspruch 1 oder 2, wobei der Verzweigungskoeffizient des ersten Mittels 0,6 oder weniger beträgt.

4. Zweikomponenten-Klebstoff, umfassend die härtbare Zweikomponenten-Zusammensetzung nach einem der Ansprüche 1 bis 3.

5. Zweikomponenten-Klebstoff nach Anspruch 4, wobei das zahlenmittlere Molekulargewicht des ersten Mittels 600 oder mehr und 3000 oder weniger beträgt.

6. Zweikomponenten-Beschichtungsmittel, umfassend die härtbare Zweikomponenten-Zusammensetzung nach einem der Ansprüche 1 bis 3.

7. Zweikomponenten-Beschichtungsmittel nach Anspruch 6, wobei das zahlenmittlere Molekulargewicht des ersten Mittels 1.000 oder mehr und 50.000 oder weniger beträgt.

8. Laminat, umfassend:

ein erstes Substrat;
ein zweites Substrat; und
eine Klebstoffschicht, die das erste Substrat und das zweite Substrat laminiert,
wobei die Klebstoffschicht durch Mischen eines ersten Mittels mit einem zweiten Mittel gebildet wird, das erste Mittel durch Umsetzen eines Monomers zum Einführen einer Verzweigungseinheit in ein Molekül mit einem Monomer zum Einführen einer ersten funktionellen Gruppe in ein Molekülende hergestellt wird, der Verzweigungskoeffizient des ersten Mittels 1/f oder mehr beträgt, wobei f die Anzahl der funktionellen Gruppen ist, die ein Monomer mit der größten Anzahl funktioneller Gruppen unter den Monomeren zum Einführen einer Verzweigungseinheit in ein Molekül besitzt, das zweite Mittel eine zweite funktionelle Gruppe aufweist, die mit der ersten funktionellen Gruppe umsetzbar ist und eine durchschnittliche Anzahl der zweiten funktionellen Gruppen von 2,5 oder mehr aufweist, und beim Mischen der Mittel das Äquivalenzverhältnis der zweiten funktionellen Gruppe zur ersten funktionellen Gruppe 0,15 oder mehr und weniger als 0,5 beträgt,
wobei die erste funktionelle Gruppe eine Hydroxylgruppe ist und die zweite funktionelle Gruppe eine Isocyanatgruppe ist; und
wobei das erste Mittel ein Harz enthält, das als Hauptgerüst eine Polyesterstruktur, eine Polyester-Polyurethanstruktur oder eine Polyetherstruktur aufweist,
wobei der Verzweigungskoeffizient und das Äquivalentverhältnis wie in der Beschreibung beschrieben bestimmt werden.

9. Laminat nach Anspruch 8, wobei das erste Substrat und das zweite Substrat jeweils eine aufgedampfte Schicht aus einem Metalloxid aufweisen, die auf einem Harzfilm angeordnet ist, und die aufgedampfte Schicht des ersten Substrats und die aufgedampfte Schicht des zweiten Substrats so angeordnet sind, dass sie einander gegenüberliegen.

**Revendications**

1. Composition durcissable à deux constituants, comprenant :

un premier agent qui est produit par réaction d'un monomère destiné à introduire un motif ramifié dans une molécule avec un monomère destiné à introduire un premier groupe fonctionnel dans une extrémité moléculaire ; et
un deuxième agent qui présente un deuxième groupe fonctionnel pouvant réagir avec le premier groupe fonctionnel,
le coefficient de ramification du premier agent étant de 1/f ou plus ;
f représentant le nombre de groupes fonctionnels possédés par un monomère présentant le plus grand nombre

de groupes fonctionnels parmi les monomères destinés à introduire un motif ramifié dans une molécule ;
le nombre moyen de deuxièmes groupes fonctionnels possédés par le deuxième agent étant de 2,5 ou plus ;
dans le mélange et l'utilisation des agents, le rapport d'équivalence du deuxième groupe fonctionnel au premier groupe fonctionnel étant de 0,15 ou plus et inférieur à 0,5,
le premier groupe fonctionnel étant un groupe hydroxyle et le deuxième groupe fonctionnel étant un groupe isocyanate ; et
le premier agent contenant une résine présentant, comme squelette principal, une structure polyester, une structure polyester-polyuréthane ou une structure polyéther ;
le coefficient de ramification et le rapport d'équivalence étant déterminés comme décrit dans la description.

**2.** Composition durcissable à deux constituants selon la revendication 1, le coefficient de ramification du premier agent étant de 1/(f - 1) ou plus.

**3.** Composition durcissable à deux constituants selon la revendication 1 ou 2, le coefficient de ramification du premier agent étant de 0,6 ou moins.

**4.** Adhésif à deux constituants comprenant la composition durcissable à deux constituants selon l'une quelconque des revendications 1 à 3.

**5.** Adhésif à deux constituants selon la revendication 4, le poids moléculaire moyen en nombre du premier agent étant de 600 ou plus et de 3000 ou moins.

**6.** Agent de revêtement à deux constituants comprenant la composition durcissable à deux constituants selon l'une quelconque des revendications 1 à 3.

**7.** Agent de revêtement à deux constituants selon la revendication 6, le poids moléculaire moyen en nombre du premier agent étant de 1000 ou plus et de 50.000 ou moins.

**8.** Stratifié comprenant :

un premier substrat ;
un deuxième substrat ; et
une couche adhésive qui stratifie le premier substrat et le deuxième substrat,
la couche adhésive étant formée par mélange d'un premier agent avec un deuxième agent, le premier agent étant produit par réaction d'un monomère destiné à introduire un motif ramifié dans une molécule avec un monomère destiné à introduire un premier groupe fonctionnel dans une extrémité moléculaire, le coefficient de ramification du premier agent étant de 1/f ou plus, f étant le nombre de groupes fonctionnels possédés par un monomère présentant le plus grand nombre de groupes fonctionnels parmi les monomères destinés à introduire un motif ramifié dans une molécule, le deuxième agent présentant un deuxième groupe fonctionnel pouvant réagir avec le premier groupe fonctionnel et présentant un nombre moyen de deuxièmes groupes fonctionnels de 2,5 au plus et, dans le mélange des agents, le rapport d'équivalence du deuxième groupe fonctionnel au premier groupe fonctionnel étant de 0,15 ou plus et inférieur à 0,5,
le premier groupe fonctionnel étant un groupe hydroxyle et le deuxième groupe fonctionnel étant un groupe isocyanate ; et
le premier agent contenant une résine présentant, comme squelette principal, une structure polyester, une structure polyester-polyuréthane ou une structure polyéther ;
le coefficient de ramification et le rapport d'équivalence étant déterminés comme décrit dans la description.

**9.** Stratifié selon la revendication 8, le premier substrat et le deuxième substrat présentant chacun une couche déposée en phase vapeur d'un oxyde métallique disposé sur un film de résine et la couche déposée en phase vapeur du premier substrat et la couche déposée en phase vapeur du deuxième substrat étant disposées de manière à se faire face mutuellement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003003145 A
- JP 2008156502 A
- WO 2014103994 A1